# EUROPÄISCHE PATENTSCHRIFT

(11) **EP 4 018 107 B1**
(45) Veröffentlichungstag und Bekanntmachung des Hinweises auf die Patenterteilung: **08.10.2025**
(21) Anmeldenummer: 20757849.3
(22) Anmeldetag: 11.08.2020
(51) Int. Cl.: F16D 13/68

(54) **SYSTEM AUS KUPPLUNGSSCHEIBE BZW. REIBSCHEIBE UND KUPPLUNGSGLOCKE ZUM BEWIRKEN EINER GERÄUSCHOPTIMIERUNG**
SYSTEM COMPOSED OF A CLUTCH DISC OR FRICTION DISC AND CLUTCH HOUSING FOR BRINGING ABOUT NOISE OPTIMISATION
SYSTÈME COMPOSÉ D'UN DISQUE D'EMBRAYAGE OU D'UN DISQUE DE FRICTION ET CARTER D'EMBRAYAGE PERMETTANT D'OPTIMISER LE BRUIT

(30) Priorität: 21.08.2019 DE 102019122482
(43) Veröffentlichungstag der Anmeldung: 29.06.2022
(73) Patentinhaber: KNORR-BREMSE Systeme für Nutzfahrzeuge GmbH, 80809 München (DE)
(72) Erfinder: MELLAR, Jörg, 85652 Pliening (DE); SAINTIVE, Michel, 14340 Le Pré d'Auge (FR); AMIOT, Frederic, 14290 Saint-Cyr-du-Ronceray (FR)
(86) Internationale Anmeldenummer: PCT/EP2020/072542
(87) Internationale Veröffentlichungsnummer: WO 2021/032544

(56) Entgegenhaltungen:
- EP-A1- 3 181 932
- EP-A1- 3 181 932
- DE-A1- 102015 216 270
- DE-A1- 102015 216 270
- JP-A- 2005 161 422
- JP-A- 2005 161 422
- JP-A- 2009 144 890
- JP-A- 2009 144 890

## Beschreibung

Die vorliegende Erfindung betrifft ein System aus Kupplungsscheibe bzw. Reibscheibe und Kupplungsglocke zum Bewirken einer Geräuschoptimierung.

Nutzfahrzeuge weisen Druckluftverbraucher auf, wie beispielsweise ein pneumatisches Bremssystem, eine Luftfederungsanlage oder eine pneumatische Kupplung. Für diese Druckluftverbraucher wird ein Drucklufterzeuger vorgesehen, wie beispielsweise ein Kompressor. Ein solcher Kompressor wird in der Regel durch den Fahrzeugmotor angetrieben, beispielsweise durch eine Verbrennungskraftmaschine eines Nutzfahrzeugs.

Nutzfahrzeuge weisen des Weiteren Druckluftspeicher auf. In diesen Druckluftspeichern wird die von einem Drucklufterzeuger erzeugte Druckluft zwischengespeichert, bis diese von einem Druckluftverbraucher verbraucht wird.

Wenn ein Druckluftspeicher mit Druckluft gefüllt ist, sodass ein entsprechender Abschaltdruck vorliegt, wird der Drucklufterzeuger gemäß des Standes der Technik temporär von seinem Antrieb abgekoppelt, um Energie einzusparen. Ein solches Abkoppeln geschieht mittels einer Lamellenkupplung, die zwischen dem Fahrzeugmotor und dem Drucklufterzeuger zum Unterbrechen und Wiederherstellen der Drehmomentübertragung vorgesehen ist.

Hierzu ist diese Lamellenkupplung so konstruiert, dass eine Drehmomentübertragung zwischen einer radial außen liegenden Kupplungsglocke sowie einer radial innen liegenden Welle mittels Reibschluss hergestellt und wieder getrennt werden kann.

Dieser Reibschluss wird mittels Kupplungsscheiben (beispielsweise aus Stahl) und Reibscheiben (beispielsweise mit aufgeprägtem Reibbelag) hergestellt, wobei die Kupplungsscheiben formschlüssig und drehmomentfest in die Kupplungsglocke eingreifen, und die Reibscheiben formschlüssig und drehmomentfest in die Welle eingreifen (wobei alternativ hierzu auch eine umgekehrte Anordnung möglich ist).

Ölgeschmierte (nasslaufende) Lamellenkupplungen gemäß des Standes der Technik weisen, wie bereits einleitend beschrieben, eine Kupplungsglocke auf, sowie Kupplungsscheiben, die mit der Kupplungsglocke mittels Formschluss ein Drehmoment übertragen. Hierzu weisen die Kupplungsscheiben an ihrem Umfang radial nach außen ragende Zähne auf, wobei die Kupplungsglocke an ihrer Innenfläche Nuten zum Aufnehmen der Zähne aufweist. Alternativ hierzu, gem. der "umgekehrten Anordnung", übertragen die Reibscheiben (anstatt der Kupplungsscheiben) mit der Kupplungsglocke mittels Formschluss ein Drehmoment, und die Kupplungsscheiben (anstatt der Reibscheiben) mit der Welle mittels Formschluss ein Drehmoment.

In diesem Kontext offenbart beispielsweise die JP 2009 144890 A die Bereitstellung einer Reibungskupplungsvorrichtung, die Schäden an einer Zwischenscheibe verhindert oder verringert und eine hohe Kraftübertragungsleistung und eine längere Betriebslebensdauer aufweist.

Die EP 3 181 932 A1 betrifft eine Kupplungsanordnung mit einem Eingangselement und mit einem drehfest mit einer Kupplungsglocke verbundenen Ausgangselement, mit einem Kupplungspaket, das innerhalb der Kupplungsglocke zwischen dem Eingangselement und dem Ausgangselement angeordnet ist, und mit einer Federanordnung, welche das Kupplungspaket in einem geschlossenen Zustand beaufschlagt. Die Kupplungsglocke weist einen Hohlzylinder auf, der an seiner inneren Umfangsfläche mit einem Nabenprofil versehenen ist. An einem axialen Endbereich des Hohlzylinders ist eine erste ringförmige Anschlagscheibe angeordnet und an einem von dem axialen Endbereich beabstandeten Bereich ist eine zweite ringförmige Anschlagscheibe angeordnet. Das Nabenprofil des Hohlzylinders weist eine Vielzahl von sich radial nach innen erstreckenden Profilelementen wie insbesondere Zähne oder Keile auf, welche jeweils eine in Umfangsrichtung gleiche erste Breite und gleichen ersten Abstand voneinander aufweisen.

Auch die DE 10 2015 216270 A1 offenbart einen Reibelementeträger für eine Mehrscheiben-Reibkupplung, umfassend eine Drehachse, einen axialen Abschnitt mit Zähnen, die Flanken aufweisen, die sich in axialer und radialer Richtung erstrecken, zum formschlüssigen Eingriff mit Reibelementen, wobei jeder Zahn auf einer radialen Innenseite des axialen Abschnitts eine radiale Ausbuchtung bildet, und wobei in radial äußere Abschnitte wenigstens einiger Zähne jeweils eine Ausnehmung eingebracht ist, um einen radialen Durchtritt eines Fluids zu erlauben. Dabei weisen unterschiedliche Zähne, durch deren Ausnehmungen unterschiedliche Volumenströme des Fluids zu erzielen sind, unterschiedliche Ausdehnungen in Umfangsrichtung auf.

Die JP 2005 161422 A ist auf ein Bereitstellen eines Phasenanpassungsverfahrens und einer Phasenanpassungsvorrichtung eines laminierten Teils, das effizient und sicher eine Phase anpasst, gerichtet.

Im Kontext dieser Patentanmeldung wird nachfolgend ein System aus Kupplungsglocke und Kupplungsscheibe(n) beschrieben, wobei Kupplungsglocke und Kupplungsscheibe(n) formschlüssig und drehmomentfest ineinander eingreifen. Wie bereits einleitend als "umgekehrte Anordnung" beschrieben, sind auch Ausgestaltungen denkbar, bei denen nicht die Kupplungsscheiben, sondern die Reibscheiben formschlüssig in die Kupplungsglocke eingreifen. Vereinfacht wird nachfolgend aber lediglich eine dieser beiden Varianten beschrieben. Trotzdem werden hierdurch die beschriebenen Merkmale ebenfalls auch für eine Reibscheibe gemäß der "umgekehrten Anordnung" analog offenbart.

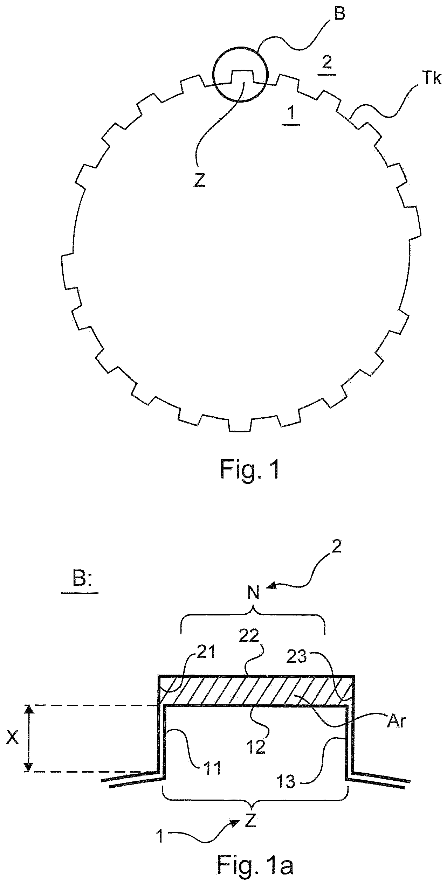

**Fig. 1** zeigt eine Trennkontur Tk zwischen einer Kupplungsscheibe 1 (radial innen liegend) und einer Kupplungsglocke 2 (radial außen liegend). In Fig. 1 ist ein Bereich B des Zusammenspiels zwischen einem Zahn Z (der Kupplungsscheibe 1) und einer Nut (der Kupplungsglocke 2) mit einem Kreis markiert, wobei dieser Bereich in Fig. 1a im Detail dargestellt wird.

**Fig. 1a** zeigt den oben erwähnten Bereich des Zusammenspiels zwischen einem Zahn Z (der Kupplungsscheibe 1) und einer Nut N (der Kupplungsglocke 2) im Detail. Die dargestellte Nut N der Kupplungsglocke 2 weist in radialer Richtung verlaufende seitliche Flanken 21, 23 auf, sowie eine radial außenliegende in Umfangsrichtung verlaufende Umfangskante 22. Die Nut N ist zum Aufnehmen des dargestellten Zahns Z der Kupplungsscheibe 1 ausgebildet.

Der dargestellte Zahn Z weist in radialer Richtung verlaufende seitliche Flanken 11, 13 auf, sowie eine radial außenliegende, in Umfangsrichtung verlaufende und die seitlichen Flanken 11, 13 verbindende Umfangskante 12.

Zwischen der Umfangskante 12 der Kupplungsscheibe 1 und den seitlichen Flanken 21, 23 der Kupplungsglocke 2 sowie der radial außen liegenden Umfangskante 22 der Kupplungsglocke 2 wird ein Ölrücklaufquerschnitt Ar gebildet, der in Fig. 1a schraffiert dargestellt ist. Der Ölrücklaufquerschnitt im Bereich des Zusammenspiels zwischen allen Zähnen Z (der Kupplungsscheibe 1) und allen Nuten (der Kupplungsglocke 2) wird als Gesamtölrücklaufquerschnitt definiert.

Wenn eine solche Kupplung getrennt werden soll, geschieht das Trennen der Kupplungsscheiben nicht aktiv, sondern passiv. Zum Trennen der Kupplung muss gewährleistet werden, dass das Öl möglichst ungehindert zwischen den einzelnen Kupplungsscheiben und Reibscheiben abfließen kann. Da das Öl bei einer rotierenden Kupplung aufgrund der Fliehkraft radial nach außen gedrückt wird, muss das Öl im Bereich des (radial außen liegenden) Zusammenspiels zwischen Zähnen und Nuten aus den Zwischenräumen zwischen den einzelnen Kupplungsscheiben und Reibscheiben abfließen können.

Das Separieren der Kupplungsscheiben erfolgt detailliert betrachtet durch ein axiales Verschieben der Kupplungsscheiben innerhalb der Kupplungsglocke.

Ein Problem bei Kupplungsscheiben und einer Kupplungsglocke gemäß des Standes der Technik besteht darin, dass aufgrund des Spiels der Kupplungsscheiben innerhalb der Kupplungsglocke in Umfangsrichtung unerwünschte Geräusche auftreten. Dies geschieht insbesondere dann, wenn die Kupplung geschlossen ist und ein Wechsel zwischen "Schub- und Zugbetrieb" stattfindet, d.h., wenn der zum Antreiben des Drucklufterzeugers vorgesehene Momentenverlauf einen Nulldurchgang aufweist. Dies bedeutet, dass der Drucklufterzeuger zwar grundsätzlich durch den Antrieb angetrieben wird, zeitweise aber der Drucklufterzeuger den Antrieb antreibt. In diesem Moment ergibt sich ein Anlagenwechsel der Kupplungsscheibenverzahnung innerhalb der Kupplungsglockennuten (veranschaulicht anhand Fig. 1a würde dies bedeuten, dass beispielsweise zunächst die Flächen 11 und 21 miteinander in Kontakt stehen, nach einem Anlagenwechsel der Kupplungsscheibenverzahnung aber die Flächen 13 und 23 miteinander in Kontakt stehen), wodurch unerwünschte Geräusche resultieren.

Es ist daher eine Aufgabe der Erfindung, eine Kupplungsscheibe bzw. Reibscheibe, eine Kupplungsglocke, sowie ein System aus Kupplungsscheibe bzw. Reibscheibe und Kupplungsglocke zum Bewirken einer Geräuschoptimierung anzubieten.

Diese Aufgabe wird gelöst durch den Gegenstand des unabhängigen Anspruchs.

Bevorzugte Weiterbildungen sind Gegenstand der Unteransprüche.

Die anspruchsgemäße Kupplungsscheibe bzw. Reibscheibe gemäß des unabhängigen Anspruchs definiert und beansprucht das Bauteil, welches formschlüssig und drehmomentfest in die Kupplungsglocke eingreift, unabhängig davon, ob dieses Bauteil den Reibbelag (gem. der o.g. "umgekehrten Anordnung") aufweist, und somit als Reibscheibe anzusehen ist, oder nicht. Nachfolgend wird allerdings lediglich auf eine anspruchsgemäße Kupplungsscheibe eingegangen. Die getroffenen Aussagen gelten für eine anspruchsgemäße Reibscheibe gem. der "umgekehrten Anordnung" analog.

Eine Geräuschoptimierung kann insbesondere dann erzielt werden, wenn die Nuten einer Kupplungsglocke mittels eines Räumverfahrens hergestellt werden, wodurch eine sehr exakte Fertigung der Nuten ermöglicht wird.

Um ein Räumverfahren einsetzen zu können, muss eine solche Kupplungsglocke mehrteilig ausgeführt werden und einen separaten zylindrischen Grundkörper aufweisen, wobei auf der Innenseite des zylindrischen Grundkörpers Nuten mittels eines Räumverfahrens eingebracht werden.

Eine hier betrachtete Kupplungsscheibe weist große und kleine Zähne auf, wobei jeder Zahn einen bestimmten Abstand zwischen seinen seitlichen Flanken aufweist (=Zahnbreite). Die Zahnbreite eines großen Zahns wird als "ZSg" definiert, und die Zahnbreite eines kleinen Zahns als "ZSk".

Darüber hinaus weist eine hier betrachtete Kupplungsglocke für jeden Zahn der Kupplungsscheibe eine Nut auf, für jeden großen Zahn eine große Nut, und für jeden kleinen Zahn eine kleine Nut. Jede Nut weist einen bestimmten Abstand zwischen ihren seitlichen Flanken auf (=Nutenbreite). Die Nutenbreite einer großen Nut wird als "NSg" definiert, und die Nutenbreite einer kleinen Nut als "NSk".

Des Weiteren weist die Kupplungsglocke vorzugsweise noch weitere Nuten auf, die keinen Zahn aufnehmen, um den Ölrücklaufquerschnitt zu vergrößern.

Versuche haben gezeigt, dass überraschenderweise die Abmessungen der Zähne einer Kupplungsscheibe bzw. Reibscheibe und der Nuten der Kupplungsglocke ausschlaggebend für das Bewirken einer Geräuschoptimierung sind. Nachfolgende Tabelle zeigt Bereiche von Zahn- und Nutenbreiten, mit der daraus resultierenden Geräuschentwicklung.

| ZSk [mm] | ZSg [mm] | NSk [mm] | NSg [mm] | Geräusche |
|---|---|---|---|---|
| 5,5 - 6,0 | 9,0 - 9,5 | 6,0, - 6,5 | 9,5 - 10,0 | schlecht |
| 6,0 - 6,5 | 9,5 - 10,0 | 6,5 - 7,0 | 10,0 - 10,5 | schlecht |
| 6,5 - 7,0 | 10,0 - 10,5 | 7,0 - 7,5 | 10,5 - 11,0 | optimal |
| 7,0 - 7,5 | 10,5 - 11,0 | 7,5 - 8,0 | 11,0 - 11,5 | schlecht |
| 7,5 - 8,0 | 11,0 - 11,5 | 8,0 - 8,5 | 11,5 - 12,0 | schlecht |

Die mittlere Zeile mit "optimalen Geräuschen" zeigt die bevorzugten Abmessungen für Zahn- und Nutenbreite zum Erreichen einer Geräuschoptimierung.

Wie oben beschrieben weist eine Kupplungsscheibe mehrere radial nach außen ragende Zähne mit seitlichen Flanken zum Übertragen eines Drehmoments zwischen Kupplungsscheibe und einer Kupplungsglocke auf. Die Kupplungsscheibe weist des Weiteren die seitlichen Flanken eines jeden Zahns verbindende, in Umfangsrichtung verlaufende, radial außen liegende Umfangskanten auf.

Des Weiteren weist die Kupplungsglocke seitliche Flanken zum Übertragen eines Drehmoments zwischen ihr und der Kupplungsscheibe auf. Darüber hinaus weist die Kupplungsglocke radial außen liegende, d.h. radial nach innen gerichtete, in Umfangsrichtung verlaufende Umfangskanten auf, welche ihre seitlichen Flanken verbinden. Durch zwei seitliche Flanken und eine diese Flanken verbindende, radial außen liegende Umfangskante wird eine einzelne Nut der Kupplungsglocke ausgebildet.

Im montierten Zustand befinden sich die Zähne der Kupplungsscheibe innerhalb der Nuten der Kupplungsglocke. Dabei wird zwischen jeder Nut, in der sich ein Zahn befindet, und diesem Zahn ein Ölrücklaufquerschnitt ausgebildet. Des Weiteren wird durch jede Nut, in der sich kein Zahn befindet, ebenfalls ein Ölrücklaufquerschnitt ausgebildet. Die Summe aller Ölrücklaufquerschnitte wird als Gesamtölrücklaufquerschnitt bezeichnet.

Zwischen einer Nut, in der sich ein Zahn befindet, und diesem Zahn wird ein Ölrücklaufquerschnitt wie nachfolgend beschrieben ausgebildet. Zwischen der radial außen liegenden Umfangskante des Zahns und den seitlichen Flanken der Nut sowie der radial außen liegenden Umfangskante der Nut wird ein Querschnitt gebildet, der als Ölrücklaufquerschnitt angesehen wird.

Vorzugsweise wird in der radial außen liegenden Umfangskante wenigstens eines Zahns der Kupplungsscheibe eine Ausnehmung vorgesehen, um den Ölrücklaufquerschnitt zwischen diesem Zahn und der Nut, in welcher er sich befindet, zu vergrößern.

Hierdurch wird ein Kontaktbereich der seitlichen Flanken von Zahn und Nut trotz einer Vergrößerung des Ölrücklaufquerschnitt nicht verringert, wodurch ein Separieren der Kupplungsscheiben ohne eine Verschlechterung des Verschleißes schneller erfolgt.

Hierdurch wird die Schleppleistung einer Kupplung reduziert, ohne hierdurch den Verschleiß zu erhöhen.

Des Weiteren ist das Vorsehen einer Ausnehmung in einer Kupplungsscheibe kostengünstiger zu realisieren als in einer Kupplungsglocke, wodurch die Fertigungskosten sinken.

Durch ein bogenförmiges Ausbilden der Ausnehmung wird die Vergrößerung des Ölrücklaufquerschnitts maximiert, bei gleichzeitiger Minimierung der Materialspannungen.

Vorzugsweise weist nicht nur ein einziger Zahn der Kupplungsscheibe eine Ausnehmung auf, sondern mehrere Zähne der Kupplungsscheibe. Vorzugsweise sind die eine Ausnehmung aufweisenden Zähne gegenüberliegend angeordnet.

Vorzugsweise weisen alle Zähne der Kupplungsscheibe eine Ausnehmung auf.

Vorzugsweise werden alle Nuten einer Kupplungsglocke durch einen Zahn einer Kupplungsscheibe ausgefüllt. Wenigstens einer dieser Zähne weist eine Ausnehmung auf. Hierdurch wird trotz einer Vergrößerung des Gesamtölrücklaufquerschnitts der Verschleiß minimiert.

Alternativ dazu wird gemäß einer weiteren bevorzugten Ausführungsform neben einer Kupplungsscheibe mit wenigstens einem Zahn, der eine Ausnehmung aufweist, außerdem wenigstens ein Zahn "weggelassen". Dies bedeutet, dass durch diesen wenigstens einen weggelassenen Zahn wenigstens eine Nut der Kupplungsglocke nicht durch einen Zahn gefüllt ist. Hierdurch wird ebenfalls der Gesamtölrücklaufquerschnitt vergrößert.

Vorzugsweise weist ein System aus einer Kupplungsglocke und Kupplungsscheiben genau drei Kupplungsscheiben aus.
- Fig. 1: zeigt eine Trennkontur Tk zwischen einer Kupplungsscheibe 1 und einer Kupplungsglocke 2.
- Fig. 1a: zeigt einen vergrößerten Ausschnitt B aus Fig. 1.
- Fig. 2: zeigt eine Trennkontur Tk zwischen einer Kupplungsscheibe 1 und einer Kupplungsglocke 2.
- Fig. 3: zeigt eine Trennkontur Tk zwischen einer Kupplungsscheibe 1 und einer Kupplungsglocke 2.
- Fig. 4: zeigt eine Kupplungsscheibe 1 im Zusammenspiel mit einer Kupplungsglocke 2.
- Fig. 4a: zeigt einen vergrößerten Ausschnitt C aus Fig. 4.
- Fig. 5: zeigt eine Trennkontur Tk zwischen einer Kupplungsscheibe 1 und einer Kupplungsglocke 2.
- Fig. 6: zeigt Zahnbreiten ZSg, ZSk und Nutenbreiten NSg, NSk.

Die Fign. 1 und 1a wurden bereits in der Beschreibungseinleitung gewürdigt.

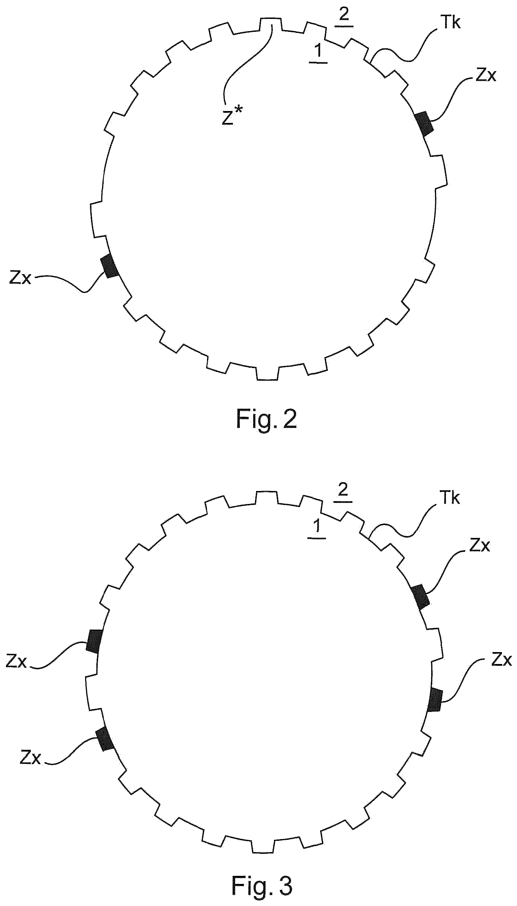

**Fig. 2** zeigt eine Trennkontur Tk zwischen einer Kupplungsscheibe 1 und einer Kupplungsglocke 2 gemäß eines Ausführungsbeispiels. Im Vergleich zu Fig. 1 unterscheidet sich die Trennkontur Tk lediglich dadurch, dass zwei Zähne Zx, hier schwarz dargestellt, in der Konstruktion weggelassen sind. Bei einem weggelassenen Zahn Zx handelt es sich um eine Nut in der Kupplungsglocke 2, in welcher sich im montierten Zustand der Kupplungsscheibe 1 kein Zahn befindet.

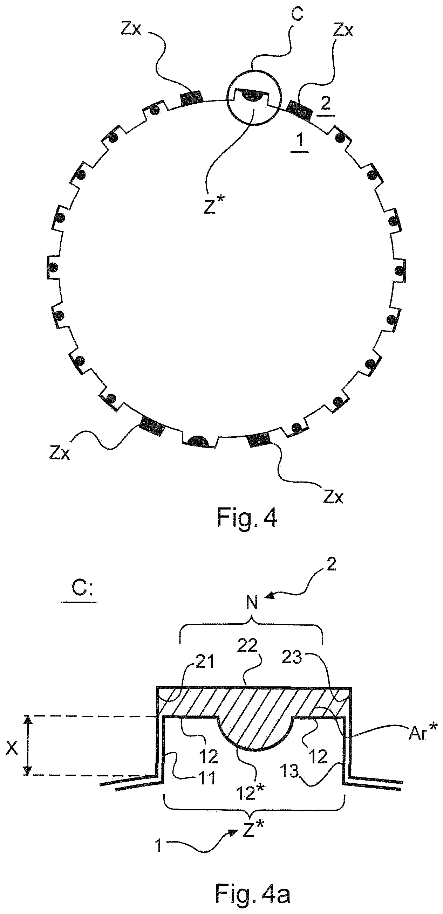

Des Weiteren unterscheidet sich die in Fig. 2 gezeigte Konstruktion dahingehend von der in Fig. 1 bzw. in Fig. 1a gezeigten Konstruktion, dass alle Zähne Z* in Fig. 2 eine Ausnehmung aufweisen, wie detailliert in Fig. 4 dargestellt.

**Fig. 3** zeigt analog zu Fig. 2 eine Trennkontur Tk zwischen einer Kupplungsscheibe 1 und einer Kupplungsglocke 2 gemäß eines Ausführungsbeispiels. In dem in Fig. 3 gezeigten Ausführungsbeispiel sind vier Zähne Zx, hier schwarz dargestellt, in der Konstruktion weggelassen, im Gegensatz zu zwei weggelassenen Zähnen Zx in Fig. 2. Andere Unterschiede liegen zwischen den Konstruktionen der Fign. 2 und 3 nicht vor.

**Fig. 4** zeigt nochmals die Kupplungsscheibe 1 aus Fig. 3, im Vergleich zu den Fign. 1, 2 und 3 wird die Trennkontur zwischen Kupplungsscheibe 1 und Kupplungsglocke 2 allerdings nicht lediglich schematisch dargestellt. Vielmehr sind in Fig. 4 Zähne Z* anhand deren Ausnehmungen zu erkennen, wobei diese Ausnehmungen in der Beschreibung der nachfolgenden Fig. 4a unter Bezugnahme auf den Ausschnitt C (siehe Fig. 4) detailliert erläutert werden.

Alle Zähne der in Fig. 4 dargestellten Kupplungsscheibe 1 weisen des Weiteren eine Ausnehmung auf.

**Fig. 4a** zeigt analog zu Fig. 1a den oben erwähnten Bereich (Ausschnitts C) des Zusammenspiels zwischen einem Zahn Z* (der Kupplungsscheibe 1) und einer Nut N (der Kupplungsglocke 2) im Detail. Die dargestellte Nut N der Kupplungsglocke 2 weist in radialer Richtung verlaufende seitliche Flanken 21, 23 auf, sowie eine radial außenliegende, in Umfangsrichtung verlaufende Umfangskante 22. Die Nut N ist zum Aufnehmen des dargestellten Zahns Z* der Kupplungsscheibe 1 ausgebildet.

Die Umfangsrichtung entspricht in dieser Detailansicht der horizontalen Richtung in Fig. 4a, wobei die radiale Richtung der vertikalen Richtung in Fig. 4a entspricht. Gleiches gilt im Übrigen für Fig. 1a analog.

Der dargestellte Zahn Z* weist in radialer Richtung verlaufende seitliche Flanken 11, 13 auf, sowie eine radial außenliegende, in Umfangsrichtung verlaufende Umfangskante 12, die allerdings durch eine Ausnehmung 12* unterbrochen wird.

Zwischen der zweigeteilten Umfangskante 12 sowie der Ausnehmung 12* der Kupplungsscheibe 1 und den seitlichen Flanken 21, 23 der Kupplungsglocke 2 sowie der radial außen liegenden Umfangskante 22 der Kupplungsglocke 2 wird ein (vergrößerter) Ölrücklaufquerschnitt Ar* gebildet, der schraffiert dargestellt ist. Der Ölrücklaufquerschnitt im Bereich des Zusammenspiels zwischen allen Zähnen Z (der Kupplungsscheibe 1) und allen Nuten N (der Kupplungsglocke 2) wird als Gesamtölrücklaufquerschnitt definiert. Falls des Weiteren Zähne wie oben beschrieben weggelassen wurden, vergrößert sich der Gesamtölrücklaufquerschnitt zusätzlich.

Die Ausnehmung 12* ist in diesem Ausführungsbeispiel bogenförmig ausgebildet. Darüber hinaus ist die Ausnehmung 12* in diesem Ausführungsbeispiel so angeordnet, dass die seitlichen Flanken 11, 13 durch die Ausnehmung 12* nicht verkürzt werden. Dies bedeutet, dass die Ausnehmung 12* die seitlichen Flanken 11, 13 nicht schneidet.

Gemäß einem weiteren, nicht gezeigten Ausführungsbeispiel ist die Ausnehmung 12* zwar bogenförmig ausgebildet, aber nicht zwingend so angeordnet, dass die seitlichen Flanken 11, 13 durch die Ausnehmung 12* nicht verkürzt werden.

Gemäß einem weiteren, nicht gezeigten Ausführungsbeispiel ist die Ausnehmung 12* nicht zwingend bogenförmig ausgebildet, aber so angeordnet, dass die seitlichen Flanken 11, 13 durch die Ausnehmung 12* nicht verkürzt werden.

Die restlichen Merkmale dieser beiden Abwandlungen entsprechen den unter Bezugnahme auf die Fign. 4 und 4a beschriebenen Merkmalen.

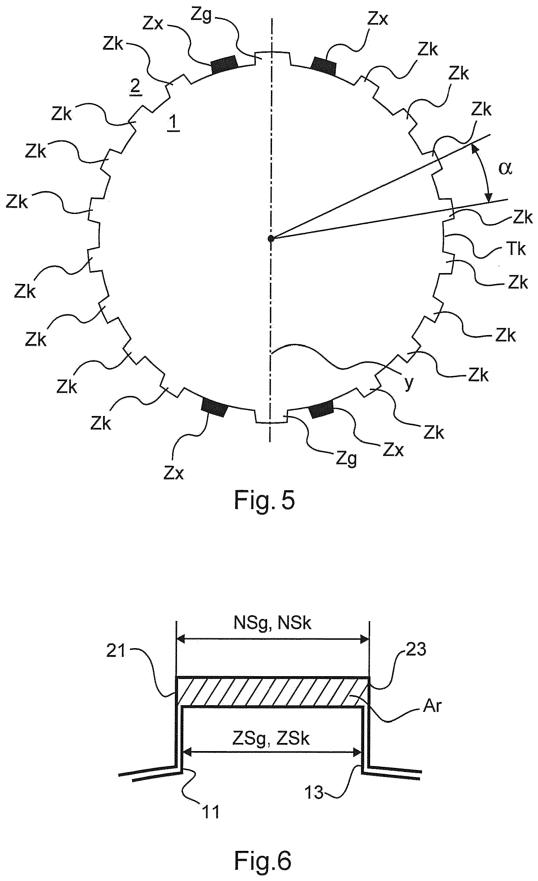

**Fig. 5** zeigt eine Trennkontur Tk zwischen Kupplungsscheibe 1 und Kupplungsglocke 2, um eine Anordnung von Zähnen Zg (=große Zähne) und Zk (=kleine Zähne) innerhalb von Nuten der Kupplungsglocke 2 zu veranschaulichen. Für eine bessere Übersichtlichkeit wurden die Nuten der Kupplungsglocke 2 in dieser Darstellung nicht beschriftet, allerdings wird jeder große Zahn Zg von einer Nut Ng (=große Nut, nicht beschriftet) aufgenommen, und jeder kleine Zahn Zk von einer Nut Nk (=kleine Nut, nicht beschriftet). Darüber hinaus weist die Kupplungsscheibe 1 vier "weggelassene Zähne" Zx, hier schwarz dargestellt, auf. Dies bedeutet, dass die Kupplungsglocke 2 an diesen Stellen zwar jeweils eine Nut aufweist, die Kupplungsscheibe 1 allerdings keinen Zahn aufweist, wodurch diese Nuten unausgefüllt bleiben.

Durch die großen Zähne Zg, die in diesem Ausführungsbeispiel gegenüberliegend (hier: oben/unten) angeordnet sind, wird eine Symmetrieachse Y ausgebildet, wobei die kleinen Zähne Zk so um den Umfang der Kupplungsscheibe 1 angeordnet sind, dass sich eine Achsensymmetrie bezüglich der Symmetrieachse Y einstellt. Gleiches gilt analog für die Nuten der Kupplungsglocke 2.

Die kleinen Zähne Zk sind in diesem Ausführungsbeispiel mit einem Winkelabstand von a = (360/22) Grad angeordnet. Gleiches gilt analog für die Nuten der Kupplungsglocke 2.

**Fig. 6** zeigt analog zu den obigen Figuren 1a und 4a ein Zusammenspiel zwischen einem Zahn und einer Nut, um die Maße von Zähnen und Nuten, insbesondere Zahnbreite und Nutenbreite zu verdeutlichen.

In obiger Fig. 5 wurden große Zähne Zg und kleine Zähne Zk beschrieben, welche unterschiedliche Zahnbreiten aufweisen. Trotzdem werden in Fig. 6 die Maße für große und kleine Zähne (zur Veranschaulichung) anhand der Darstellung eines einzigen Zahns erläutert, wobei aber klar ist, dass diese Zähne in der Realität eine unterschiedliche Breite aufweisen.

Sowohl ein kleiner Zahn Zk als auch ein großer Zahn Zg weisen jeweils seitliche Flanken 11, 13 auf. Der Abstand zwischen diesen Flanken 11, 13 definiert die Zahnbreite. Ein kleiner Zahn Zk weist die Breite ZSk auf, und ein großer Zahn Zg die Breite ZSg.

Jeder große Zahn Zg der Kupplungsscheibe 1 wird durch eine große Nut Ng der Kupplungsglocke 2 aufgenommen, gleiches gilt für jeden kleinen Zahn Zk der Kupplungsscheibe 1, der durch eine kleine Nut Nk der Kupplungsglocke 2 aufgenommen wird.

Sowohl eine kleine Nut Nk als auch eine große Nut Ng weisen jeweils seitliche Flanken 21, 23 auf. Der Abstand zwischen diesen Flanken 21, 23 definiert die Nutenbreite. Eine kleine Nut Nk weist die Breite NSk auf, und eine große Nut Ng die Breite NSg.

Die Umfangskanten der Zähne Zg, Zk weisen in diesem Ausführungsbeispiel keine Ausnehmungen zum Vergrößern des Ölrücklaufquerschnitts Ar auf.

In einem weiteren, nicht dargestellten Ausführungsbeispiel, das sonst exakt dem Ausführungsbeispiel aus Fign. 5 und 6 entspricht, weisen die Umfangskanten der Zähne Zg, Zk Ausnehmungen zum Vergrößern des Ölrücklaufquerschnitts Ar auf den Ölrücklaufquerschnitts Ar* auf, wie in. Fig. 4a beschrieben.

Die seitlichen Flanken 21, 23 der Nuten Ng, Nk sowie die seitlichen Flanken 11, 13 der Zähne Zg, Zk sind in den hier gezeigten Ausführungsbeispielen bezüglich einander parallel angeordnet.

In einem weiteren, nicht dargestellten Ausführungsbeispiel, das sonst exakt dem Ausführungsbeispiel aus Fign. 5 und 6 entspricht, und optional der o.g. Ausgestaltung mit Ausnehmungen entspricht, sind diese gegenüber einander nicht parallel angeordnet, wodurch die Zahn- und Nutenbreiten keinem festgelegten Wert entsprechen, sondern einem festgelegten Wertebereich.

## Patentansprüche

1. System aus zumindest einer Kupplungsscheibe (1) oder einer Reibscheibe sowie einer Kupplungsglocke (2) zum Bewirken einer Geräuschoptimierung, wobei
die Kupplungsglocke (2) einen zylindrischen Grundkörper mit axial verlaufenden Nuten (N, Ng, Nk) auf der Innenseite des zylindrischen Grundkörpers aufweist, wobei die Nuten (N Ng, Nk) seitliche Flanken (21, 23) aufweisen,
die Kupplungsscheibe (1) oder die Reibscheibe mehrere radial nach außen ragende Zähne (Z, Zg, Zk) mit seitlichen Flanken (11, 13) zum Übertragen eines Drehmoments zwischen der Kupplungsscheibe (1) bzw. der Reibscheibe und in der Kupplungsglocke (2) vorgesehenen Nuten (N) mit seitlichen Flanken (21, 23) aufweist,
**dadurch gekennzeichnet, dass**
wenigstens einer der Zähne (Zk) einen Abstand (ZSk) zwischen den seitlichen Flanken (11, 13) aufweist, der in einem Bereich von 6,5 mm bis 7,0 mm liegt, wodurch ein kleiner Zahn (Zk) definiert wird und
wenigstens eine der Nuten (Nk) einen Abstand (NSk) zwischen den seitlichen Flanken (21, 23) aufweist, der in einem Bereich von 7,0 mm bis 7,5 mm liegt, wodurch eine kleine Nut (Nk) definiert wird, wobei
jeder kleine Zähne (Zk) einer Kupplungsscheibe (1) bzw. Reibscheibe mit einer kleinen Nut (Nk) der Kupplungsglocke (2) in Eingriff steht.

2. System gemäß dem vorhergehenden Anspruch, wobei
wenigstens einer der Zähne (Zg) einen Abstand (ZSg) zwischen den seitlichen Flanken (11, 13) aufweist, der in einem Bereich von 10,0 mm bis 10,5 mm liegt, wodurch ein großer Zahn (Zg) definiert wird.

3. System gemäß einem der vorhergehenden Ansprüche, wobei
die Kupplungsscheibe (1) bzw. Reibscheibe genau zwei der großen Zähne (Zg) aufweist, die auf dem Umfang der Kupplungsscheibe (1) bzw. Reibscheibe gegenüberliegend angeordnet sind.

4. System gemäß einem der vorhergehenden Ansprüche, wobei
die Kupplungsscheibe (1) bzw. Reibscheibe genau sechzehn der kleinen Zähne (Zk) aufweist, die auf dem Umfang der Kupplungsscheibe (1) bzw. Reibscheibe verteilt sind.

5. System gemäß Anspruch 2, wobei
die Kupplungsscheibe (1) bzw. Reibscheibe genau zwei der großen Zähne (Zg) aufweist, die auf dem Umfang der Kupplungsscheibe (1) bzw. Reibscheibe gegenüberliegend angeordnet sind, und
genau sechzehn der kleinen Zähne (Zk) aufweist, die auf dem Umfang der Kupplungsscheibe (1) bzw. Reibscheibe verteilt sind.

6. System gemäß dem vorhergehenden Anspruch, wobei
durch die beiden großen Zähne (Zg) eine Symmetrieachse (Y) definiert wird, wobei
auf beiden Seiten der Symmetrieachse (Y) jeweils acht der kleinen Zähne (Zk) angeordnet sind.

7. System gemäß dem vorhergehenden Anspruch, wobei
die kleinen Zähne (Zk) auf beiden Seiten der Symmetrieachse (Y) jeweils in einem Winkelabstand von 360/22 Grad untereinander angeordnet sind, und/oder
die Anordnung der kleinen Zähne (Zk) achsensymmetrisch zu der Symmetrieachse (Y) ist.

8. System gemäß einem der vorhergehenden Ansprüche, wobei
wenigstens eine der Nuten (Ng) einen Abstand (NSg) zwischen den seitlichen Flanken (21, 23) aufweist, der in einem Bereich von 10,5 mm bis 11,0 mm liegt, wodurch eine große Nut (Ng) definiert wird.

9. System gemäß einem der vorhergehenden Ansprüche, wobei
die Kupplungsglocke (2) genau zwei der großen Nuten (Ng) aufweist, die auf dem Umfang der Kupplungsglocke (2) gegenüberliegend angeordnet sind.

10. System gemäß dem vorhergehenden Anspruch, wobei
die Kupplungsglocke (2) wenigstens sechzehn der kleinen Nuten (Nk) aufweist, die auf dem Umfang der Kupplungsglocke (2) verteilt sind.

11. System gemäß Anspruch 8, wobei
die Kupplungsglocke (2) genau zwei der großen Nuten (Ng) aufweist, die auf dem Umfang der Kupplungsglocke (2) gegenüberliegend angeordnet sind, und wenigstens sechzehn der kleinen Nuten (Nk) aufweist, die auf dem Umfang der Kupplungsglocke (2) verteilt sind.

12. System gemäß dem vorhergehenden Anspruch, wobei
durch die beiden großen Nuten (Ng) eine Symmetrieachse (Y) definiert wird, wobei auf beiden Seiten der Symmetrieachse (Y) jeweils acht der kleinen Nuten (Nk) angeordnet sind.

13. System gemäß dem vorhergehenden Anspruch, wobei
die kleinen Nuten (Nk) auf beiden Seiten der Symmetrieachse (Y) jeweils in einem Winkelabstand von 360/22 Grad untereinander angeordnet sind, und/oder
die Anordnung der kleinen Nuten (Nk) achsensymmetrisch zu der Symmetrieachse (Y) ist.

14. System gemäß einem der Ansprüche 2 bis 13, wobei
jeder große Zahn (Zg) einer Kupplungsscheibe (1) bzw. Reibscheibe mit einer großen Nut (Ng) der Kupplungsglocke (2) in Eingriff steht.

## Claims

1. System comprising at least a clutch disc (1) or a friction disc as well as a clutch case (2) for effecting noise optimization, wherein
the clutch case (2) has a cylindrical main body with axially extending grooves (N, Ng, Nk) on the inside of the cylindrical main body, wherein the grooves (N, Ng, Nk) have lateral flanks (21, 23),
the clutch disc (1) or the friction disc have a plurality of radially outwardly projecting teeth (Z, Zg, Zk) with lateral flanks (11, 13) for transmitting a torque between the clutch disc (1) and/or the friction disc and grooves (N) provided in the clutch case (2) with lateral flanks (21, 23),
**characterized in that**
at least one of the teeth (Zk) has a distance (ZSk) between the lateral flanks (11, 13), which is in a range of 6.5 mm to 7.0 mm, as a result of which a small tooth (Zk) is defined and
at least one of the grooves (Nk) has a distance (NSk) between the lateral flanks (21, 23), which is in a range of 7.0 mm to 7.5 mm, as a result of which a small groove (Nk) is defined, wherein
each small tooth (Zk) of a clutch disc (1) and/or friction disc is engaged in a small groove (Nk) of the clutch case (2).

2. System according to the preceding claim, wherein
at least one of the teeth (Zg) has a distance (ZSg) between the lateral flanks (11, 13), which is in a range of 10.0 mm to 10.5 mm, as a result of which a large tooth (Zg) is defined.

3. System according to any one of the preceding claims, wherein
the clutch disc (1) and/or friction disc has exactly two of the large teeth (Zg), which are arranged opposite one another on the circumference of the clutch disc (1) and/or friction disc.

4. System according to any one of the preceding claims, wherein
the clutch disc (1) and/or friction disc has exactly sixteen of the small teeth (Zk), which are distributed on the circumference of the clutch disc (1) and/or friction disc.

5. System according to claim 2, wherein
the clutch disc (1) and/or friction disc has exactly two of the large teeth (Zg), which are arranged opposite one another on the circumference of the clutch disc (1) and/or friction disc, and
has exactly sixteen of the small teeth (Zk), which are distributed on the circumference of the clutch disc (1) and/or friction disc.

6. System according to the preceding claim, wherein
an axis of symmetry (Y) is defined by the two large teeth (Zg), wherein
eight of the small teeth (Zk) are arranged on both sides of the axis of symmetry (Y) in each case.

7. System according to the preceding claim, wherein
the small teeth (Zk) are arranged on both sides of the axis of symmetry (Y) in each case at an angular distance of 360/22 degrees from one another, and/or
the arrangement of the small teeth (Zk) is axially symmetrical relative to the axis of symmetry (Y).

8. System according to any one of the preceding claims, wherein
at least one of the grooves (Ng) has a distance (NSg) between the lateral flanks (21, 23), which is in a range of 10.5 mm to 11.0 mm, as a result of which a large groove (Ng) is defined.

9. System according to any one of the preceding claims, wherein
the clutch case (2) has exactly two of the large grooves (Ng), which are arranged opposite one another on the circumference of the clutch case (2).

10. System according to the preceding claim, wherein
the clutch case (2) has at least sixteen of the small grooves (Nk), which are distributed on the circumference of the clutch case (2).

11. System according to claim 8, wherein
the clutch case (2) has exactly two of the large grooves (Ng), which are arranged opposite one another on the circumference of the clutch case (2), and has at least sixteen of the small grooves (Nk), which are distributed on the circumference of the clutch case (2).

12. System according to the preceding claim, wherein
an axis of symmetry (Y) is defined by the two large grooves (Ng), wherein eight of the small grooves (Nk) are arranged on both sides of the axis of symmetry (Y) in each case.

13. System according to the preceding claim, wherein
the small grooves (Nk) are arranged on both sides of the axis of symmetry (Y) in each case at an angular distance of 360/22 degrees from one another, and/or
the arrangement of the small grooves (Nk) is axially symmetrical relative to the axis of symmetry (Y).

14. System according to any one of claims 2 to 13, wherein
each large tooth (Zg) of a clutch disc (1) and/or friction disc is engaged in a large groove (Ng) of the clutch case (2).

## Revendications

1. Système composé d'au moins un disque d'embrayage (1) ou d'un disque de friction ainsi que d'une cloche d'embrayage (2) permettant une optimisation du bruit, dans lequel
la cloche d'embrayage (2) présente un corps de base cylindrique avec des rainures (N, Ng, Nk) s'étendant axialement sur le côté intérieur du corps de base cylindrique, dans lequel les rainures (N, Ng, Nk) présentent des flancs (21, 23) latéraux,
le disque d'embrayage (1) ou le disque de friction présente plusieurs dents (Z, Zg, Zk) dépassant radialement vers l'extérieur avec des flancs (11, 13) latéraux pour la transmission d'un couple entre le disque d'embrayage (1) ou le disque de friction et des rainures (N) prévues dans la cloche d'embrayage (2) avec des flancs (21, 23) latéraux,
**caractérisé en ce que**
au moins l'une des dents (Zk) présente une distance (Zsk) entre les flancs (11, 13) latéraux qui se situe dans une plage de 6,5 mm à 7,0 mm, ce qui fait qu'une petite dent (Zk) est définie et
au moins l'une des rainures (Nk) présente une distance (Nsk) entre les flancs (21, 23) latéraux qui se situe dans une plage de 7,0 mm à 7,5 mm, ce qui fait qu'une petite rainure (Nk) est définie, dans lequel
chaque petite dent (Zk) d'un disque d'embrayage (1) ou disque de friction est en prise avec une petite rainure (Nk) de la cloche d'embrayage (2).

2. Système selon la revendication précédente, dans lequel
au moins l'une des dents (Zg) présente une distance (ZSg) entre les flancs (11, 13) latéraux qui se situe dans une plage de 10,0 mm à 10,5 mm, ce qui fait qu'une grande dent (Zg) est définie.

3. Système selon l'une quelconque des revendications précédentes, dans lequel
le disque d'embrayage (1) ou disque de friction présente précisément deux des grandes dents (Zg) qui sont agencées de manière opposée sur la périphérie du disque d'embrayage (1) ou disque de friction.

4. Système selon l'une quelconque des revendications précédentes, dans lequel
le disque d'embrayage (1) ou disque de friction présente précisément seize des petites dents (Zk) qui sont réparties sur la périphérie du disque d'embrayage (1) ou disque de friction.

5. Système selon la revendication 2, dans lequel
le disque d'embrayage (1) ou disque de friction présente précisément deux des grandes dents (Zg) qui sont agencées de manière opposée sur la périphérie du disque d'embrayage (1) ou disque de friction, et
présente précisément seize des petites dents (Zk) qui sont réparties sur la périphérie du disque d'embrayage (1) ou disque de friction.

6. Système selon la revendication précédente, dans lequel
un axe de symétrie (Y) est défini par les deux grandes dents (Zg), dans lequel
respectivement huit des petites dents (Zk) sont agencées des deux côtés de l'axe de symétrie (Y).

7. Système selon la revendication précédente, dans lequel
les petites dents (Zk) sont agencées des deux côtés de l'axe de symétrie (Y) respectivement à une distance angulaire de 360/22 degrés entre elles, et/ou
l'agencement des petites dents (Zk) est symétrique à l'axe de symétrie (Y).

8. Système selon l'une quelconque des revendications précédentes, dans lequel
au moins l'une des rainures (Ng) présente une distance (NSg) entre les flancs (21, 23) latéraux qui se situe dans une plage de 10,5 mm à 11,0 mm, ce qui fait qu'une grande rainure (Ng) est définie.

9. Système selon l'une quelconque des revendications précédentes, dans lequel
la cloche d'embrayage (2) présente précisément deux des grandes rainures (Ng) qui sont agencées de manière opposée sur la périphérie de la cloche d'embrayage (2).

10. Système selon la revendication précédente, dans lequel
la cloche d'embrayage (2) présente au moins seize des petites rainures (Nk) qui sont réparties sur la périphérie de la cloche d'embrayage (2).

11. Système selon la revendication 8, dans lequel
la cloche d'embrayage (2) présente précisément deux des grandes rainures (Ng) qui sont agencées de manière opposée sur la périphérie de la cloche d'embrayage (2) et présente au moins seize des petites rainures (Nk) qui sont réparties sur la périphérie de la cloche d'embrayage (2).

12. Système selon la revendication précédente, dans lequel
un axe de symétrie (Y) est défini par les deux grandes rainures (Ng), dans lequel respectivement huit des petites rainures (Nk) sont agencées des deux côtés de l'axe de symétrie (Y).

13. Système selon la revendication précédente, dans lequel
les petites rainures (Nk) sont agencées des deux côtés de l'axe de symétrie (Y) respectivement à une distance angulaire de 360/22 degrés entre elles, et/ou
l'agencement des petites rainures (Nk) est symétrique à l'axe de symétrie (Y).

14. Système selon l'une quelconque des revendications 2 à 13, dans lequel
chaque grande dent (Zg) d'un disque d'embrayage (1) ou disque de friction est en prise avec une grande rainure (Ng) de la cloche d'embrayage (2).
